# EUROPEAN PATENT APPLICATION

(11) **EP 4 060 403 A1**
(43) Date of publication of application: **21.09.2022**
(21) Application number: 21162934.0
(22) Date of filing: 16.03.2021
(51) Int. Cl.: G02F 1/35

(54) **HOLLOW-CORE PHOTONIC CRYSTAL FIBER BASED MULTIPLE WAVELENGTH LIGHT SOURCE DEVICE**

(71) Applicant: ASML Netherlands B.V., 5500 AH Veldhoven (NL)
(72) Inventor: NI, Yongfeng, 5500 AH Veldhoven (NL); PONGERS, Willem, Richard, 5500 AH Veldhoven (NL)
(74) Representative: ASML Netherlands B.V.

(57) **Abstract**

A multiple wavelength light source device and associated method for generating output radiation comprising a plurality of discrete output wavelength bands. The multiple wavelength light source device comprises a pump radiation source arrangement configured to generate input radiation comprising at least a first frequency component and a second frequency component; and a hollow-core photonic crystal fiber configured to confine a working medium. The hollow-core photonic crystal fiber is configured to receive said input radiation and to generate said plurality of discrete output wavelength bands distributed over a wavelength range of interest via a seed-assisted cascaded four wave mixing (FWM) process in said working medium.

## Description

### FIELD

The present invention relates to a hollow-core photonic crystal fiber based multiple wavelength radiation generator, and in particular such a multiple wavelength radiation generator in relation to metrology applications in the manufacture of integrated circuits.

### BACKGROUND

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-ki lithography may be used to process features with dimensions smaller than the classical resolution limit of a lithographic apparatus. In such process, the resolution formula may be expressed as CD = k₁×λ/NA, where λ is the wavelength of radiation employed, NA is the numerical aperture of the projection optics in the lithographic apparatus, CD is the "critical dimension" (generally the smallest feature size printed, but in this case half-pitch) and ki is an empirical resolution factor. In general, the smaller ki the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

Metrology tools are used in many aspects of the IC manufacturing process, for example as alignment tools for proper positioning of a substrate prior to an exposure, leveling tools to measure a surface topology of the substrate, for e.g., focus control and scatterometry based tools for inspecting/measuring the exposed and/or etched product in process control. In each case, a radiation source is required. For various reasons, including measurement robustness and accuracy, multiple wavelength radiation sources are increasingly used for such metrology applications. It would be desirable to improve on present devices for multiple wavelength radiation generation.

### SUMMARY

In a first aspect of the invention there is provided a multiple wavelength light source device, being configured for generating output radiation comprising a plurality of discrete output wavelength bands, the multiple wavelength light source device comprising: a pump radiation source arrangement configured to generate input radiation comprising at least a first frequency component and a second frequency component; and a hollow-core photonic crystal fiber configured to confine a working medium; wherein the hollow-core photonic crystal fiber is configured to receive said input radiation and to generate said plurality of discrete output wavelength bands distributed over a wavelength range of interest via a seed-assisted cascaded four wave mixing (FWM) process in said working medium.

In a second aspect of the invention there is provided a method of generating output radiation comprising a plurality of discrete output wavelength bands, the method comprising: generating input radiation comprising at least a first frequency component and a second frequency component; and exciting a confined working medium with said input radiation to generate said plurality of discrete output wavelength bands distributed over a wavelength range of interest via a seed-assisted cascaded four wave mixing (FWM) process within said working medium.

Other aspects of the invention comprise a metrology device comprising the broadband light source device of the first aspect.

### BRIEF DESCRIPTION OF THE DRAWINGS

Embodiments of the invention will now be described, by way of example only, with reference to the accompanying schematic drawings, in which:
- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 depicts a schematic overview of a scatterometry apparatus used as a metrology device, which may comprise a radiation source according to embodiments of the invention;
- Figure 5 depicts a schematic overview of a level sensor apparatus which may comprise a radiation source according to embodiments of the invention;
- Figure 6 depicts a schematic overview of an alignment sensor apparatus which may comprise a radiation source according to embodiments of the invention;
- Figure 7 is a schematic cross sectional view of a hollow core optical fiber that may form part of a radiation source according to an embodiment in a transverse plane (i.e. perpendicular to an axis of the optical fiber);
- Figure 8 depicts a schematic representation of a radiation source according to an embodiment for providing broadband output radiation;
- Figure 9 is an output spectrum such as may be obtained via a seed-assisted cascaded four wave mixing (FWM) process in a method according to an embodiment;
- Figure 10 is a schematic illustration of a radiation source arrangement according to an embodiment;
- Figure 11 is a plot of fiber length against pulse energy illustrating a particular combination region of these parameters for obtaining desired spectrum characteristics; and
- Figure 12 depicts a block diagram of a computer system for controlling a radiation source according to an embodiment.

### DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

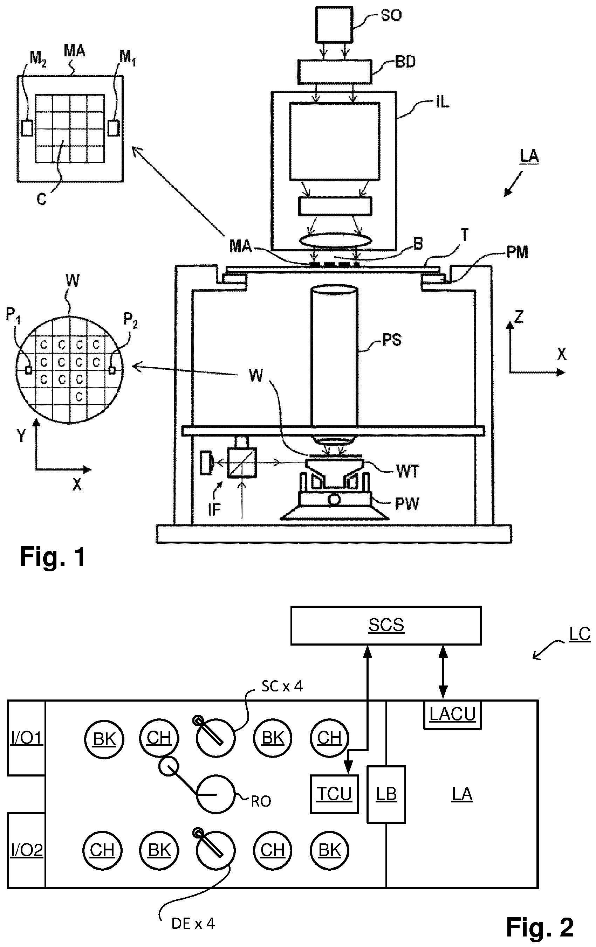

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks PI, P2. Although the substrate alignment marks PI, P2 as illustrated occupy dedicated target portions, they may be located in spaces between target portions. Substrate alignment marks PI, P2 are known as scribe-lane alignment marks when these are located between the target portions C.

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

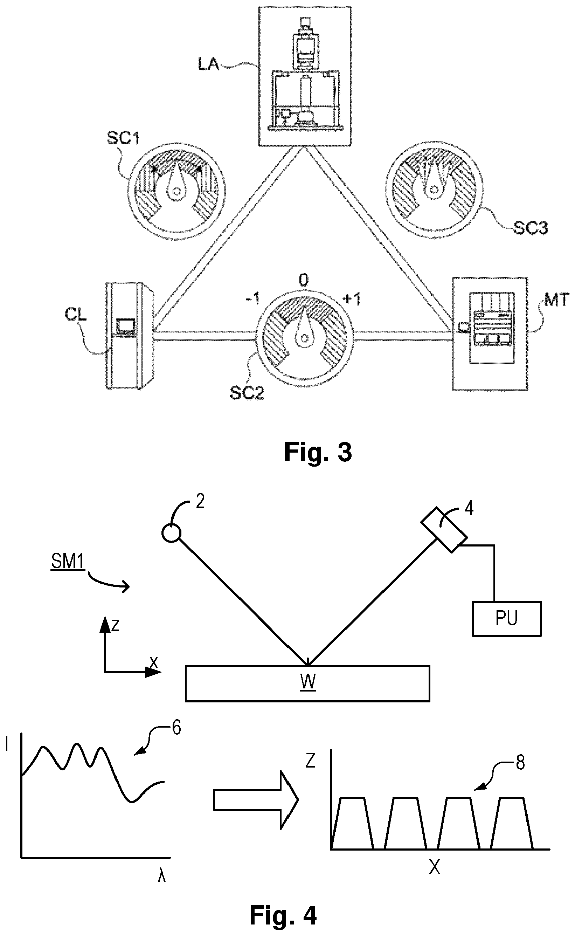

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Fig. 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Fig. 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Fig. 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Fig. 3 by the multiple arrows in the third scale SC3).

In lithographic processes, it is desirable to make frequently measurements of the structures created, e.g., for process control and verification. Tools to make such measurement are typically called metrology tools MT. Different types of metrology tools MT for making such measurements are known, including scanning electron microscopes or various forms of scatterometer metrology tools MT. Scatterometers are versatile instruments which allow measurements of the parameters of a lithographic process by having a sensor in the pupil or a conjugate plane with the pupil of the objective of the scatterometer, measurements usually referred as pupil based measurements, or by having the sensor in the image plane or a plane conjugate with the image plane, in which case the measurements are usually referred as image or field based measurements. Such scatterometers and the associated measurement techniques are further described in patent applications US20100328655, US2011102753A1, US20120044470A, US20110249244, US20110026032 or EP1,628,164A, incorporated herein by reference in their entirety. Aforementioned scatterometers may measure gratings using light from soft x-ray and visible to near-IR wavelength range.

In a first embodiment, the scatterometer MT is an angular resolved scatterometer. In such a scatterometer reconstruction methods may be applied to the measured signal to reconstruct or calculate properties of the grating. Such reconstruction may, for example, result from simulating interaction of scattered radiation with a mathematical model of the target structure and comparing the simulation results with those of a measurement. Parameters of the mathematical model are adjusted until the simulated interaction produces a diffraction pattern similar to that observed from the real target.

In a second embodiment, the scatterometer MT is a spectroscopic scatterometer MT. In such spectroscopic scatterometer MT, the radiation emitted by a radiation source is directed onto the target and the reflected or scattered radiation from the target is directed to a spectrometer detector, which measures a spectrum (i.e. a measurement of intensity as a function of wavelength) of the specular reflected radiation. From this data, the structure or profile of the target giving rise to the detected spectrum may be reconstructed, e.g. by Rigorous Coupled Wave Analysis and non-linear regression or by comparison with a library of simulated spectra.

In a third embodiment, the scatterometer MT is an ellipsometric scatterometer. The ellipsometric scatterometer allows for determining parameters of a lithographic process by measuring scattered radiation for each polarization states. Such metrology apparatus emits polarized light (such as linear, circular, or elliptic) by using, for example, appropriate polarization filters in the illumination section of the metrology apparatus. A source suitable for the metrology apparatus may provide polarized radiation as well. Various embodiments of existing ellipsometric scatterometers are described in US patent applications 11/451,599, 11/708,678, 12/256,780, 12/486,449, 12/920,968, 12/922,587, 13/000,229, 13/033,135, 13/533,110 and 13/891,410 incorporated herein by reference in their entirety.

In one embodiment of the scatterometer MT, the scatterometer MT is adapted to measure the overlay of two misaligned gratings or periodic structures by measuring asymmetry in the reflected spectrum and/or the detection configuration, the asymmetry being related to the extent of the overlay. The two (typically overlapping) grating structures may be applied in two different layers (not necessarily consecutive layers), and may be formed substantially at the same position on the wafer. The scatterometer may have a symmetrical detection configuration as described e.g. in co-owned patent application EP1,628,164A, such that any asymmetry is clearly distinguishable. This provides a straightforward way to measure misalignment in gratings. Further examples for measuring overlay error between the two layers containing periodic structures as target is measured through asymmetry of the periodic structures may be found in PCT patent application publication no. WO 2011/012624 or US patent application US 20160161863, incorporated herein by reference in its entirety.

Other parameters of interest may be focus and dose. Focus and dose may be determined simultaneously by scatterometry (or alternatively by scanning electron microscopy) as described in US patent application US2011-0249244, incorporated herein by reference in its entirety. A single structure may be used which has a unique combination of critical dimension and sidewall angle measurements for each point in a focus energy matrix (FEM - also referred to as Focus Exposure Matrix). If these unique combinations of critical dimension and sidewall angle are available, the focus and dose values may be uniquely determined from these measurements.

A metrology target may be an ensemble of composite gratings, formed by a lithographic process, mostly in resist, but also after etch process for example. Typically the pitch and line-width of the structures in the gratings strongly depend on the measurement optics (in particular the NA of the optics) to be able to capture diffraction orders coming from the metrology targets. As indicated earlier, the diffracted signal may be used to determine shifts between two layers (also referred to 'overlay') or may be used to reconstruct at least part of the original grating as produced by the lithographic process. This reconstruction may be used to provide guidance of the quality of the lithographic process and may be used to control at least part of the lithographic process. Targets may have smaller sub-segmentation which are configured to mimic dimensions of the functional part of the design layout in a target. Due to this sub-segmentation, the targets will behave more similar to the functional part of the design layout such that the overall process parameter measurements resembles the functional part of the design layout better. The targets may be measured in an underfilled mode or in an overfilled mode. In the underfilled mode, the measurement beam generates a spot that is smaller than the overall target. In the overfilled mode, the measurement beam generates a spot that is larger than the overall target. In such overfilled mode, it may also be possible to measure different targets simultaneously, thus determining different processing parameters at the same time.

Overall measurement quality of a lithographic parameter using a specific target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016-0161863 and published US patent application US 2016/0370717A1incorporated herein by reference in its entirety.

A metrology apparatus, such as a scatterometer, is depicted in Figure 4. It comprises a broadband (white light) radiation projector 2 which projects radiation onto a substrate 6. The reflected or scattered radiation is passed to a spectrometer detector 4, which measures a spectrum 10 (i.e. a measurement of intensity as a function of wavelength) of the specular reflected radiation. From this data, the structure or profile giving rise to the detected spectrum may be reconstructed by processing unit PU, e.g. by Rigorous Coupled Wave Analysis and non-linear regression or by comparison with a library of simulated spectra as shown at the bottom of Figure 3. In general, for the reconstruction, the general form of the structure is known and some parameters are assumed from knowledge of the process by which the structure was made, leaving only a few parameters of the structure to be determined from the scatterometry data. Such a scatterometer may be configured as a normal-incidence scatterometer or an oblique-incidence scatterometer.

Overall measurement quality of a lithographic parameter via measurement of a metrology target is at least partially determined by the measurement recipe used to measure this lithographic parameter. The term "substrate measurement recipe" may include one or more parameters of the measurement itself, one or more parameters of the one or more patterns measured, or both. For example, if the measurement used in a substrate measurement recipe is a diffraction-based optical measurement, one or more of the parameters of the measurement may include the wavelength of the radiation, the polarization of the radiation, the incident angle of radiation relative to the substrate, the orientation of radiation relative to a pattern on the substrate, etc. One of the criteria to select a measurement recipe may, for example, be a sensitivity of one of the measurement parameters to processing variations. More examples are described in US patent application US2016/0161863 and published US patent application US 2016/0370717A1incorporated herein by reference in its entirety.

Another type of metrology tool used in IC manufacture is a topography measurement system, level sensor or height sensor. Such a tool may be integrated in the lithographic apparatus, for measuring a topography of a top surface of a substrate (or wafer). A map of the topography of the substrate, also referred to as height map, may be generated from these measurements indicating a height of the substrate as a function of the position on the substrate. This height map may subsequently be used to correct the position of the substrate during transfer of the pattern on the substrate, in order to provide an aerial image of the patterning device in a properly focus position on the substrate. It will be understood that "height" in this context refers to a dimension broadly out of the plane to the substrate (also referred to as Z-axis). Typically, the level or height sensor performs measurements at a fixed location (relative to its own optical system) and a relative movement between the substrate and the optical system of the level or height sensor results in height measurements at locations across the substrate.

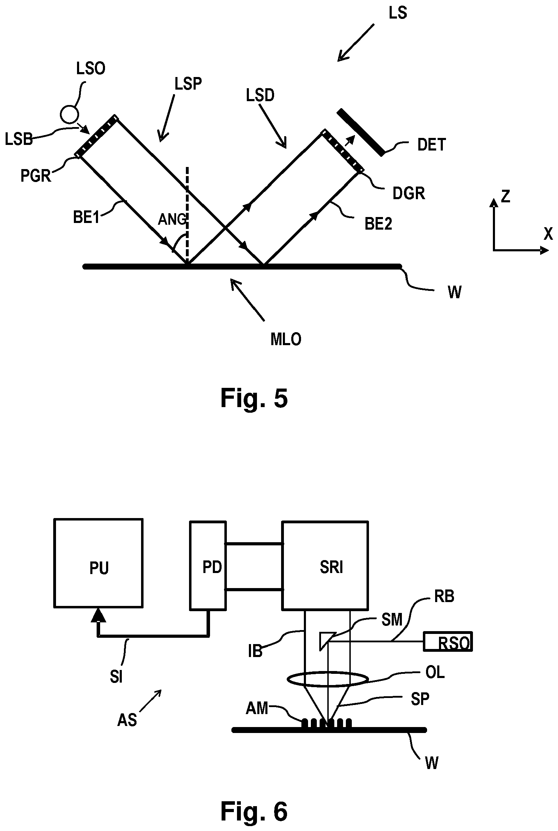

An example of a level or height sensor LS as known in the art is schematically shown in Figure 5, which illustrates only the principles of operation. In this example, the level sensor comprises an optical system, which includes a projection unit LSP and a detection unit LSD. The projection unit LSP comprises a radiation source LSO providing a beam of radiation LSB which is imparted by a projection grating PGR of the projection unit LSP. The radiation source LSO may be, for example, a narrowband or broadband light source, such as a supercontinuum light source, polarized or non-polarized, pulsed or continuous, such as a polarized or non-polarized laser beam. The radiation source LSO may include a plurality of radiation sources having different colors, or wavelength ranges, such as a plurality of LEDs. The radiation source LSO of the level sensor LS is not restricted to visible radiation, but may additionally or alternatively encompass UV and/or IR radiation and any range of wavelengths suitable to reflect from a surface of a substrate.

The projection grating PGR is a periodic grating comprising a periodic structure resulting in a beam of radiation BE1 having a periodically varying intensity. The beam of radiation BE1 with the periodically varying intensity is directed towards a measurement location MLO on a substrate W having an angle of incidence ANG with respect to an axis perpendicular (Z-axis) to the incident substrate surface between 0 degrees and 90 degrees, typically between 70 degrees and 80 degrees. At the measurement location MLO, the patterned beam of radiation BE1 is reflected by the substrate W (indicated by arrows BE2) and directed towards the detection unit LSD.

In order to determine the height level at the measurement location MLO, the level sensor further comprises a detection system comprising a detection grating DGR, a detector DET and a processing unit (not shown) for processing an output signal of the detector DET. The detection grating DGR may be identical to the projection grating PGR. The detector DET produces a detector output signal indicative of the light received, for example indicative of the intensity of the light received, such as a photodetector, or representative of a spatial distribution of the intensity received, such as a camera. The detector DET may comprise any combination of one or more detector types.

By means of triangulation techniques, the height level at the measurement location MLO can be determined. The detected height level is typically related to the signal strength as measured by the detector DET, the signal strength having a periodicity that depends, amongst others, on the design of the projection grating PGR and the (oblique) angle of incidence ANG.

The projection unit LSP and/or the detection unit LSD may include further optical elements, such as lenses and/or mirrors, along the path of the patterned beam of radiation between the projection grating PGR and the detection grating DGR (not shown).

In an embodiment, the detection grating DGR may be omitted, and the detector DET may be placed at the position where the detection grating DGR is located. Such a configuration provides a more direct detection of the image of the projection grating PGR.

In order to cover the surface of the substrate W effectively, a level sensor LS may be configured to project an array of measurement beams BE1 onto the surface of the substrate W, thereby generating an array of measurement areas MLO or spots covering a larger measurement range.

Various height sensors of a general type are disclosed for example in US7265364 and US7646471, both incorporated by reference. A height sensor using UV radiation instead of visible or infrared radiation is disclosed in US2010233600A1, incorporated by reference. In WO2016102127A1, incorporated by reference, a compact height sensor is described which uses a multi-element detector to detect and recognize the position of a grating image, without needing a detection grating.

Another type of metrology tool used in IC manufacture is an alignment sensor. A critical aspect of performance of the lithographic apparatus is therefore the ability to place the applied pattern correctly and accurately in relation to features laid down in previous layers (by the same apparatus or a different lithographic apparatus). For this purpose, the substrate is provided with one or more sets of marks or targets. Each mark is a structure whose position can be measured at a later time using a position sensor, typically an optical position sensor. The position sensor may be referred to as "alignment sensor" and marks may be referred to as "alignment marks".

A lithographic apparatus may include one or more (e.g. a plurality of) alignment sensors by which positions of alignment marks provided on a substrate can be measured accurately. Alignment (or position) sensors may use optical phenomena such as diffraction and interference to obtain position information from alignment marks formed on the substrate. An example of an alignment sensor used in current lithographic apparatus is based on a self-referencing interferometer as described in US6961116. Various enhancements and modifications of the position sensor have been developed, for example as disclosed in US2015261097A1. The contents of all of these publications are incorporated herein by reference.

Figure 6 is a schematic block diagram of an embodiment of a known alignment sensor AS, such as is described, for example, in US6961116, and which is incorporated by reference. Radiation source RSO provides a beam RB of radiation of one or more wavelengths, which is diverted by diverting optics onto a mark, such as mark AM located on substrate W, as an illumination spot SP. In this example the diverting optics comprises a spot mirror SM and an objective lens OL. The illumination spot SP, by which the mark AM is illuminated, may be slightly smaller in diameter than the width of the mark itself.

Radiation diffracted by the alignment mark AM is collimated (in this example via the objective lens OL) into an information-carrying beam IB. The term "diffracted" is intended to include zero-order diffraction from the mark (which may be referred to as reflection). A self-referencing interferometer SRI, e.g. of the type disclosed in US6961116 mentioned above, interferes the beam IB with itself after which the beam is received by a photodetector PD. Additional optics (not shown) may be included to provide separate beams in case more than one wavelength is created by the radiation source RSO. The photodetector may be a single element, or it may comprise a number of pixels, if desired. The photodetector may comprise a sensor array.

The diverting optics, which in this example comprises the spot mirror SM, may also serve to block zero order radiation reflected from the mark, so that the information-carrying beam IB comprises only higher order diffracted radiation from the mark AM (this is not essential to the measurement, but improves signal to noise ratios).

Intensity signals SI are supplied to a processing unit PU. By a combination of optical processing in the block SRI and computational processing in the unit PU, values for X- and Y-position on the substrate relative to a reference frame are output.

A single measurement of the type illustrated only fixes the position of the mark within a certain range corresponding to one pitch of the mark. Coarser measurement techniques are used in conjunction with this to identify which period of a sine wave is the one containing the marked position. The same process at coarser and/or finer levels may be repeated at different wavelengths for increased accuracy and/or for robust detection of the mark irrespective of the materials from which the mark is made, and materials on and/or below which the mark is provided. The wavelengths may be multiplexed and demultiplexed optically so as to be processed simultaneously, and/or they may be multiplexed by time division or frequency division.

In this example, the alignment sensor and spot SP remain stationary, while it is the substrate W that moves. The alignment sensor can thus be mounted rigidly and accurately to a reference frame, while effectively scanning the mark AM in a direction opposite to the direction of movement of substrate W. The substrate W is controlled in this movement by its mounting on a substrate support and a substrate positioning system controlling the movement of the substrate support. A substrate support position sensor (e.g. an interferometer) measures the position of the substrate support (not shown). In an embodiment, one or more (alignment) marks are provided on the substrate support. A measurement of the position of the marks provided on the substrate support allows the position of the substrate support as determined by the position sensor to be calibrated (e.g. relative to a frame to which the alignment system is connected). A measurement of the position of the alignment marks provided on the substrate allows the position of the substrate relative to the substrate support to be determined.

Metrology tools MT, such as a scatterometer, topography measurement system, or position measurement system mentioned above may use radiation originating from a radiation source to perform a measurement. The properties of the radiation used by a metrology tool may affect the type and quality of measurements that may be performed. For some applications, it may be advantageous to use multiple radiation frequencies to measure a substrate, for example broadband radiation may be used. Multiple different frequencies may be able to propagate, irradiate, and scatter off a metrology target with no or minimal interference with other frequencies. Therefore different frequencies may for example be used to obtain more metrology data simultaneously. Different radiation frequencies may also be able to interrogate and discover different properties of a metrology target. Broadband radiation may be useful in metrology systems MT such as for example level sensors, alignment mark measurement systems, scatterometry tools, or inspection tools. A broadband radiation source may be a supercontinuum source.

High quality broadband radiation, for example supercontinuum radiation, may be difficult to generate. One method for generating broadband radiation may be to broaden high-power narrow band or single frequency input radiation or pump radiation, for example making use of non-linear, higher order effects. The input radiation (which may be produced using a laser) may be referred to as pump radiation. Alternatively, the input radiation may be referred to as seed radiation. To obtain high power radiation for broadening effects, radiation may be confined into a small area so that strongly localized high intensity radiation is achieved. In those areas, the radiation may interact with broadening structures and/or materials forming a non-linear medium so as to create broadband output radiation. In the high intensity radiation areas, different materials and/or structures may be used to enable and/or improve radiation broadening by providing a suitable non-linear medium.

In some implementations, the broadband output radiation is created in a photonic crystal fiber (PCF). In several embodiments, such a photonic crystal fiber has microstructures around its fiber core assisting in confining radiation that travels through the fiber in the fiber core. The fiber core can be made of a solid material that has non-linear properties and that is capable of generating broadband radiation when high intensity pump radiation is transmitted through the fiber core. Although it is feasible to generate broadband radiation in solid core photonic crystal fibers, there may be a few disadvantages of using a solid material. For example, if UV radiation is generated in the solid core, this radiation might not be present in the output spectrum of the fiber because the radiation is absorbed by most solid material.

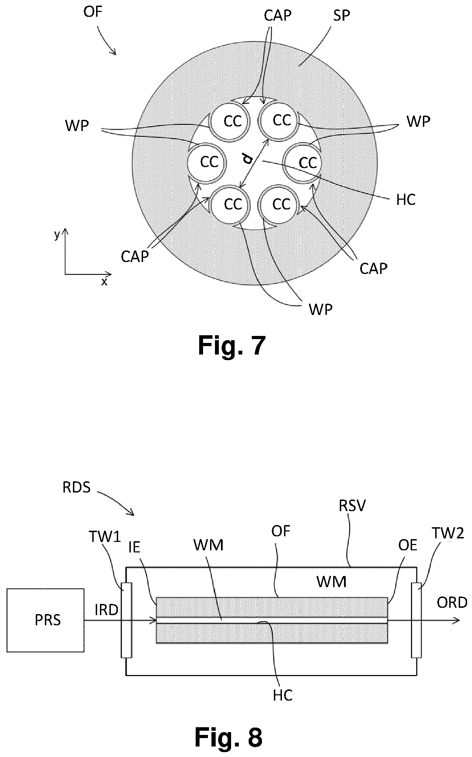

In some implementations, as discussed further below with reference to Figure 8, methods and apparatus for broadening input radiation may use a fiber for confining input radiation, and for broadening the input radiation to output broadband radiation. The fiber may be a hollow core fiber, and may comprise internal structures to achieve effective guiding and confinement of radiation in the fiber. The fiber may be a hollow core photonic crystal fiber (HC-PCF), which is particularly suitable for strong radiation confinement, predominantly inside the hollow core of the fiber, achieving high radiation intensities. The hollow core of the fiber may be filled with a gas acting as a broadening medium for broadening input radiation. Radiation input to the fiber may be electromagnetic radiation, for example radiation in one or more of the infrared, visible, UV, and extreme UV spectra. The output radiation may consist of or comprise multiple discrete wavelengths.

Some embodiments relate to a new design of such a broadband radiation source comprising an optical fiber. The optical fiber is a hollow-core, photonic crystal fiber (HC-PCF). In particular, the optical fiber may be a hollow-core, photonic crystal fiber of a type comprising anti-resonant structures for confinement of radiation. Such fibers comprising anti-resonant structures are known in the art as anti-resonant fibers, tubular fibers, single-ring fibers, negative curvature fibers or inhibited coupling fibers. Various different designs of such fibers are known in the art. Alternatively, the optical fiber may be photonic bandgap fibers (HC-PBFs, for example a Kagome fiber).

A number of types of HC-PCFs can be engineered, each based on a different physical guidance mechanism. Two such HC-PCFs include: hollow-core photonic bandgap fibers (HC-PBFs) and hollow-core anti-resonant reflecting fibers (HC-ARFs). Detail on the design and manufacture of HC-PCFs can be found in US patent US2004/015085A1 (for HC-PBFs) and International PCT patent application WO2017/032454A1 (for Hollow Core anti-resonant reflecting fibers), which are incorporated herein by reference.

An example of an optical fiber for use in the radiation source is now described with reference to Figure 7, which is a schematic cross sectional view of the optical fiber OF in a transverse plane. Further embodiments similar to the practical example of the fiber of Figure 7 are disclosed in WO2017/032454A1.

The optical fiber OF comprises an elongate body, which is longer in one dimension compared to the other two dimensions of the fiber OF. This longer dimension may be referred to as an axial direction and may define an axis of the optical fiber OF. The two other dimensions define a plane which may be referred to as a transverse plane. Figure 7 shows a cross-section of the optical fiber OF in this transverse plane (i.e. perpendicular to the axis), which is labelled as the x-y plane. The transverse cross-section of the optical fiber OF may be substantially constant along the fiber axis.

It will be appreciated that the optical fiber OF has some degree of flexibility and therefore the direction of the axis will not, in general, be uniform along the length of the optical fiber OF. The terms such as the optical axis, the transverse cross-section and the like will be understood to mean the local optical axis, the local transverse cross-section and so on. Furthermore, where components are described as being cylindrical or tubular these terms will be understood to encompass such shapes that may have been distorted as the optical fiber OF is flexed.

The optical fiber OF may have any length and it will be appreciated that the length of the optical fiber OF may be dependent on the application. The optical fiber OF may have a length between 1 cm and 10 cm, for example, the optical fiber OF may have a length between 1 cm and 7 cm or 1 cm and 5 cm.

The optical fiber OF comprises: a hollow core HC; a cladding portion surrounding the hollow core HC; and a support portion SP surrounding and supporting the cladding portion. The optical fiber OF may be considered to comprise a body (comprising the cladding portion and the support portion SP) having a hollow core HC. The cladding portion comprises a plurality of anti-resonance elements for guiding radiation through the hollow core HC. In particular, the plurality of anti-resonance elements are arranged to confine radiation that propagates through the optical fiber OF predominantly inside the hollow core HC and to guide the radiation along the optical fiber OF. The hollow core HC of the optical fiber OF may be disposed substantially in a central region of the optical fiber OF, so that the axis of the optical fiber OF may also define an axis of the hollow core HC of the optical fiber OF.

The cladding portion comprises a plurality of anti-resonance elements for guiding radiation propagating through the optical fiber OF. In particular, in this embodiment, the cladding portion comprises a single ring of six tubular capillaries CAP. Each of the tubular capillaries CAP acts as an anti-resonance element.

The capillaries CAP may also be referred to as tubes. The capillaries CAP may be circular in cross section, or may have another shape. Each capillary CAP comprises a generally cylindrical wall portion WP that at least partially defines the hollow core HC of the optical fiber OF and separates the hollow core HC from a capillary cavity CC. It will be appreciated that the wall portion WP may act as an anti-reflecting Fabry-Perot resonator for radiation that propagates through the hollow core HC (and which may be incident on the wall portion WP at a grazing incidence angle). The thickness of the wall portion WP may be suitable so as to ensure that reflection back into the hollow core HC is generally enhanced whereas transmission into the capillary cavity CC is generally suppressed. In some embodiments, the capillary wall portion WP may have a thickness between 0.01 - 10.0 µm.

It will be appreciated that, as used herein, the term cladding portion is intended to mean a portion of the optical fiber OF for guiding radiation propagating through the optical fiber OF (i.e. the capillaries CAP which confine said radiation within the hollow core HC). The radiation may be confined in the form of transverse modes, propagating along the fiber axis.

The support portion is generally tubular and supports the six capillaries CAP of the cladding portion. The six capillaries CAP are distributed evenly around an inner surface if the inner support portion SP. The six capillaries CAP may be described as being disposed in a generally hexagonal formation.

The capillaries CAP are arranged so that each capillary is not in contact with any of the other capillaries CAP. Each of the capillaries CAP is in contact with the inner support portion SP and spaced apart from adjacent capillaries CAP in the ring structure. Such an arrangement may be beneficial since it may increase a transmission bandwidth of the optical fiber OF (relative, for example, to an arrangement wherein the capillaries are in contact with each other). Alternatively, in some embodiments, each of the capillaries CAP may be in contact with adjacent capillaries CAP in the ring structure.

The six capillaries CAP of the cladding portion are disposed in a ring structure around the hollow core HC. An inner surface of the ring structure of capillaries CAP at least partially defines the hollow core HC of the optical fiber OF. The diameter d of the hollow core HC (which may be defined as the smallest dimension between opposed capillaries, indicated by arrow d) may be between 10 and 1000 µm. The diameter d of the hollow core HC may affect the mode field diameter, impact loss, dispersion, modal plurality, and non-linearity properties of the hollow core HC optical fiber OF.

In this embodiment, the cladding portion comprises a single ring arrangement of capillaries CAP (which act as anti-resonance elements). Therefore, a line in any radial direction from a center of the hollow core HC to an exterior of the optical fiber OF passes through no more than one capillary CAP.

It will be appreciated that other embodiments may be provided with different arrangements of anti-resonance elements. These may include arrangements having multiple rings of anti-resonance elements and arrangements having nested anti-resonance elements. Furthermore, although the embodiment shown in Figure 7 comprises a ring of six capillaries, in other embodiments, one or more rings comprising any number of anti-resonance elements (for example 4, 5, 6, 7, 8, 9, 10, 11 or 12 capillaries) may be provided in the cladding portion.

Figure 8 depicts a radiation source RDS for providing broadband output radiation. The radiation source RDS comprises a pulsed pump radiation source PRS or any other type of source that is capable of generating short pulses of a desired length and energy level; an optical fiber OF (for example of the type shown in Figure 7) with a hollow core HC; and a working medium WM (for example a gas) disposed within the hollow core HC. Although in Figure 8 the radiation source RDS comprises the optical fiber OF shown in Figure 7, in alternative embodiments other types of hollow core HC optical fiber OF may be used.

The pulsed pump radiation source PRS is configured to provide input radiation IRD. The hollow core HC of the optical fiber OF is arranged to receive the input radiation IRD from the pulsed pump radiation source PRS, and broaden it to provide output radiation ORD. The working medium WM enables the broadening of the frequency range of the received input radiation IRD so as to provide broadband output radiation ORD.

The radiation source RDS further comprises a reservoir RSV. The optical fiber OF is disposed inside the reservoir RSV. The reservoir RSV may also be referred to as a housing, container or gas cell. The reservoir RSV is configured to contain the working medium WM. The reservoir RSV may comprise one or more features, known in the art, for controlling, regulating, and/or monitoring the composition of the working medium WM (which may be a gas) inside the reservoir RSV. The reservoir RSV may comprise a first transparent window TW1. In use, the optical fiber OF is disposed inside the reservoir RSV such that the first transparent window TW1 is located proximate to an input end IE of the optical fiber OF. The first transparent window TW1 may form part of a wall of the reservoir RSV. The first transparent window TW1 may be transparent for at least the received input radiation frequencies, so that received input radiation IRD (or at least a large portion thereof) may be coupled into the optical fiber OF located inside reservoir RSV. It will be appreciated that optics (not shown) may be provided for coupling the input radiation IRD into the optical fiber OF.

The reservoir RSV comprises a second transparent window TW2, forming part of a wall of the reservoir RSV. In use, when the optical fiber OF is disposed inside the reservoir RSV, the second transparent window TW2 is located proximate to an output end OE of the optical fiber OF. The second transparent window TW2 may be transparent for at least the frequencies of the broadband output radiation ORD of the apparatus 120.

Alternatively, in another embodiment, the two opposed ends of the optical fiber OF may be placed inside different reservoirs. The optical fiber OF may comprise a first end section configured to receive input radiation IRD, and a second end section for outputting broadband output radiation ORD. The first end section may be placed inside a first reservoir, comprising a working medium WM. The second end section may be placed inside a second reservoir, wherein the second reservoir may also comprise a working medium WM. The functioning of the reservoirs may be as described in relation to Figure 8 above. The first reservoir may comprise a first transparent window, configured to be transparent for input radiation IRD. The second reservoir may comprise a second transparent window configured to be transparent for broadband output broadband radiation ORD. The first and second reservoirs may also comprise a sealable opening to permit the optical fiber OF to be placed partially inside and partially outside the reservoir, so that a gas can be sealed inside the reservoir. The optical fiber OF may further comprise a middle section not contained inside a reservoir. Such an arrangement using two separate gas reservoirs may be particularly convenient for embodiments wherein the optical fiber OF is relatively long (for example when the length is more than 1 m). It will be appreciated that for such arrangements which use two separate gas reservoirs, the two reservoirs (which may comprise one or more features, known in the art, for controlling, regulating, and/or monitoring the composition of a gas inside the two reservoirs) may be considered to provide an apparatus for providing the working medium WM within the hollow core HC of the optical fiber OF.

In this context a window may be transparent for a frequency if at least 50%, 75%, 85%, 90%, 95%, or 99% of incident radiation of that frequency on the window is transmitted through the window.

Both the first TW1 and the second TW2 transparent windows may form an airtight seal within the walls of the reservoir RSV so that the working medium WM (which may be a gas) may be contained within the reservoir RSV. It will be appreciated that the gas WM may be contained within the reservoir RSV at a pressure different to the ambient pressure of the reservoir RSV.

The working medium WM may comprise a noble gas such as Argon, Krypton, and Xenon, a Raman active gas such as Hydrogen, Deuterium and Nitrogen, or a gas mixture such as an Argon/Hydrogen mixture, a Xenon/Deuterium mixture, a Krypton/Nitrogen mixture, or a Nitrogen/Hydrogen mixture. Depending on the type of filling gas, the nonlinear optical processes can include modulational instability (MI), soliton self-compression, soliton fission, Kerr effect, Raman effect and dispersive wave generation (DWG), details of which are described in WO2018/127266A1 and US9160137B1 (both of which are hereby incorporated by reference). Since the dispersion of the filling gas can be tuned by varying the working medium WM pressure in the reservoir RSR (i.e. gas cell pressure), the generated broadband pulse dynamics and the associated spectral broadening characteristics can be adjusted so as to optimize the frequency conversion

In one implementation, the working medium WM may be disposed within the hollow core HC at least during receipt of input radiation IRD for producing broadband output radiation ORD. It will be appreciated that, while the optical fiber OF is not receiving input radiation IRD for producing broadband output radiation, the gas WM may be wholly or partially absent from the hollow core HC.

In order to achieve frequency broadening high intensity radiation may be desirable. An advantage of having a hollow core HC optical fiber OF is that it may achieve high intensity radiation through strong spatial confinement of radiation propagating through the optical fiber OF, achieving high localized radiation intensities. The radiation intensity inside the optical fiber OF may be high, for example due to high received input radiation intensity and/or due to strong spatial confinement of the radiation inside the optical fiber OF. An advantage of hollow core optical fibers is that they can guide radiation having a broader wavelength range that solid-core fibers and, in particular, hollow core optical fibers can guide radiation in both the ultraviolet and infrared ranges.

An advantage of using a hollow core HC optical fiber OF may be that the majority of the radiation guided inside the optical fiber OF is confined to the hollow core HC. Therefore, the majority of the interaction of the radiation inside the optical fiber OF is with the working medium WM, which is provided inside the hollow core HC of the optical fiber OF. As a result, the broadening effects of the working medium WM on the radiation may be increased.

The received input radiation IRD may be electromagnetic radiation. The input radiation IRD may be received as pulsed radiation. For example, the input radiation IRD may comprise ultrafast pulses, for example, generated by a laser.

The input radiation IRD may be coherent radiation. The input radiation IRD may be collimated radiation, an advantage of which may be to facilitate and improve the efficiency of coupling the input radiation IRD into the optical fiber OF. The input radiation IRD may be generated by a laser. Similarly, the output radiation ORD may be collimated and/or may be coherent.

Typically, for the metrology applications for which such a radiation source is designed, it is desirable that the radiation source provides a plurality of (e.g., narrow) discrete wavelength bands. For example, some metrology tools may use any number from 3 or 4, up to 30, up to 20 or up to 15 such discrete wavelength bands (e.g., per one or more polarization states). One specific metrology tool (an alignment sensor) uses 12 such discrete wavelength bands (and two polarization states; 24 illumination settings in total).

A present method for generating a desired spectrum of multiple (e.g., narrow) discrete wavelength bands comprises generating a supercontinuum output (e.g., using a supercontinuum radiation source and associated techniques as has been described), and filtering out the desired wavelength bands from this supercontinuum output, e.g., using a static optical filter (with mulit-layer coating). Such filtering however is an inefficient method of obtaining the desired spectrum. Typically, for example, a supercontinuum output may be less than 10W power (obtained using a >20W pump source), out of which only 1-2W comprises visible or otherwise usable wavelengths. After filtering, the actual useable light may be less than 100mW.

In addition to this inefficiency, the central wavelength of any filtered band will also depend on the tolerance of the (complex) multi-layer coating and therefore is not straightforward to configure. Also, current modulation instability (MI) based supercontinuum generation techniques require a long fiber length (tens of cm) in order to develop a smooth spectrum. This makes the design very cumbersome. Drawing a good quality fiber is also challenging.

To address these issues, it is proposed to use a seed-assisted cascaded four wave mixing (FWM) process in a (e.g., noble-gas-filled) hollow core fiber to directly generate the desired spectrum of multiple wavelength bands. Such an approach relies on the 3rd order nonlinearity χ³ of the pressurized gas.

For example, assume that a pump laser comprises a first frequency component of f₀. A normal FWM process typically generates other frequencies fulfilling fₘ + fₖ = 2^{∗}f₀ (degenerate FWM). In other words, the energy of two photons of frequency f₀ is converted into two new photons of frequencies fₘ and fₖ.

The proposed method comprises providing seed radiation with a slightly detuned second frequency component f₁ into the system. The frequency f₁ acts as a seed frequency such that, together with the pump frequency component f₀, a resultant seed-assisted FWM process occurs which generates new frequencies fulfilling fₘ + fₖ = f₀ + f₁. Frequency f₁ may be represented as the sum of the pump frequency f₀ and a small frequency delta Δf, i.e., f₁ = f₀+Δf. A cascading effect takes place, where each newly generated frequency will further interact to generate subsequent frequencies ('cascading') at each side of the original pump frequency, with a separation of Δf between adjacent generated frequencies.

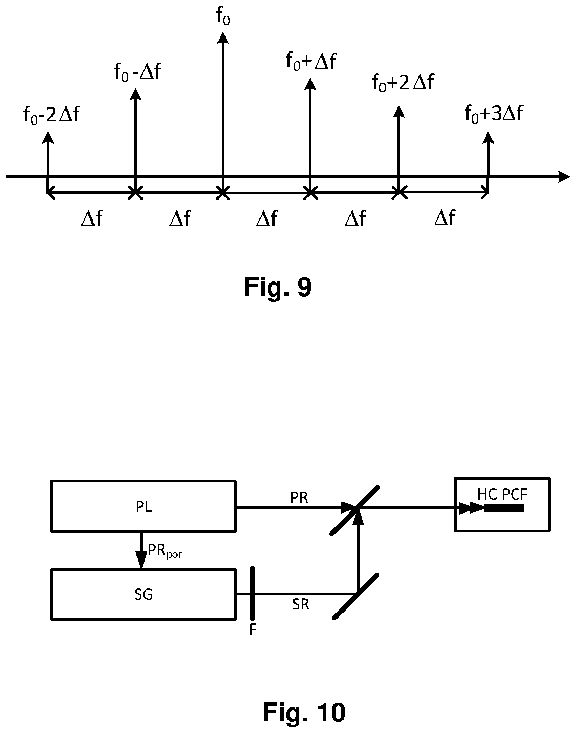

Figure 9 is a schematic diagram of an output spectrum illustrating this cascading effect. The pump or first frequency component f₀ and the seed or second frequency component f₀+Δf together produce frequencies at f₀-Δf and f₀+2Δf; [i.e., f₀+(f₀+Δf)=(f₀-Δf)+(f₀+2Δf)]. The pump frequency f₀ and generated frequency f₀+2Δf together produce frequencies at f₀-Δf and f₀+3Δf; [i.e., f₀+(f₀+2Δf)=(f₀-Δf)+(f₀+3Δf)]. The pump frequency f₀ and generated frequency f₀-Δf together produce frequencies at f₀-2Δf and f₀+Δf; [i.e., f₀+(f₀-Δf)=(f₀-2Δf)+(f₀+Δf)]. This process cascades so as to generate multiple discrete frequencies; the number of discrete frequencies generated (at usable power) depending on a number of parameters relating to the fiber and working medium (e.g., gas pressure and fiber length), as will be described below.

Figure 10 is a schematic illustration of a multiple wavelength light source device according to such an embodiment. Seed radiation can be generated via the pump laser in various ways, and it should be appreciated that this is only an example arrangement. A portion PRₚₒᵣ of the pump radiation PR from a pump laser PL is directed to a seed generation element SG to generate broadened radiation. In an embodiment, the seed generation element SG comprises a (e.g., short) piece of solid-core PCF or other suitable spectral broadening element. The proposed method only requires a small amount of detuning (e.g., in terms of wavelength: between 10nm and 200nm, between 50nm and 200nm or around 100nm detuning), this can be achieved with a few cm of PCF. Subsequent to this, a desired seed wavelength can be filtered out using a filter F to obtain seed radiation SR. Both pump radiation and seed radiation can then be used to excite the working medium in fiber HC-PCF. Alternative methods for seed generation include frequency mixing processes such as difference-frequency generation DFG, optical parametric generation OPG or amplification OPA, or optical parametric oscillation OPO.

In an embodiment, to obtain desired spectrum characteristics, the combination of pulse energy and fiber length should be such that there is efficient mixing which extends wavelength range down to 700nm or below, 600nm or below or 500nm or below, while avoiding too much self-phase modulation (SPM) such that the spectral bands overlap. Therefore, the pulse energy and fiber length may be such that SPM is sufficiently avoided so that each wavelength band is discrete and does not overlap an adjacent wavelength band (at least within a wavelength range of interest such as a range between 100 nm - 4000 nm, 200 nm - 2000 nm, 400 nm - 900 nm or 500 nm - 900 nm).

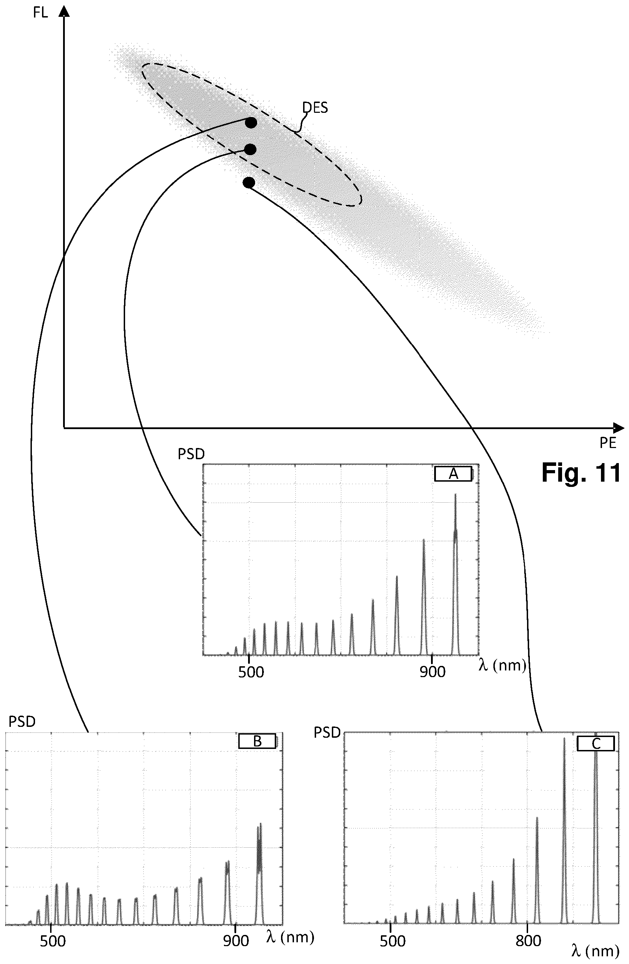

Figure 11 illustrates the relationship between pulse energy and fiber length with respect to desired spectrum characteristics. At the top of the figure is a plot of fiber length against pulse energy. The dotted line represents a desired region DES in this space, where the combination of pulse energy and fiber length results in a first desired spectrum: spectrum A (a first plot of PSD against wavelength λ). This spectrum comprises discrete usable bands at or below 500nm wavelength. This spectrum also comprises a good spectral shape (e.g., comprising a single peak) for each band. In some applications, this good spectral shape per band may be desirable as it indicates a good band stability. However, in many other cases this is not so important. For example, another desired spectrum in the desired region DES results in less well-defined spectral shapes for at least some wavelength bands (as illustrated by spectrum B). Such a spectrum may still be perfectly usable and even in some cases preferred (e.g., due to its flatter profile and/or broader peaks) over the characteristics demonstrated by spectrum A.

Above the desired region DES there will be too much self-phase modulation and the wavelength bands begin to overlap. Below this region, the spectrum is insufficiently flat, with no discrete (e.g., usable) bands at lower end of the spectrum e.g., at or below 500nm wavelength, as indicated by spectrum C.

In general, the pulse width of the pump laser determines the bandwidth of each discrete output wavelength band such that a larger pulse width results in a smaller bandwidth and *vice versa.* Band separation is determined by the difference between the seeding wavelength and the pump wavelength. The extension towards UV is determined by the gas pressure. Pulse energy can be exchanged with fiber length (smaller pulse energy, the longer fiber needed), as has been described. Therefore, in addition to the desired spectrum characteristics already described (tunable via fiber length and pulse energy), the number of wavelength bands within a desired wavelength range can be chosen by the difference between the seeding wavelength and the pump wavelength. The peak values for wavelength bands scale with pulse repetition rate of the input radiation and can therefore be controlled via control of this parameter.

An example arrangement may obtain between 5 and 30 wavelength bands, or between 10 and 20 wavelength bands, (e.g., 12 discrete wavelength bands) of radiation covering a wavelength range of interest of 200 nm - 2000 nm, 400nm -2000nm, 400nm -1200nm, 400 nm - 1000 nm, 500nm- 1200nm, 400 to 900 or 500 nm - 900 nm.

The optical fiber OF or HC-PCF may have a length between 1 cm and 30 cm, 1 cm and 20 cm, 1 cm and 10 cm, between 1 cm and 7 cm or 1 cm and 5 cm. This is much shorter than present designs; the ability to use shorter fibers resulting from the proposed seed-assisted cascaded four wave mixing (FWM) process.

In summary, the methods disclosed herein is much more energy efficient than the current method of filtering, which filters out a large amount of radiation. The method only requires a few centimeters of HC-PCF. This reduces the required volume significantly, compared to current arrangements where the HC-PCF is typically over 40cm long. This makes manufacturing of the HC-PCF easier. It is much less noisy than the current noise triggered MI supercontinuum process. With this process, stable multiple bands can be generated. The process is elastic, and therefore the central wavelength of each band depends only on the detuning of the seed laser. It is also more efficient than unassisted four wave mixing.

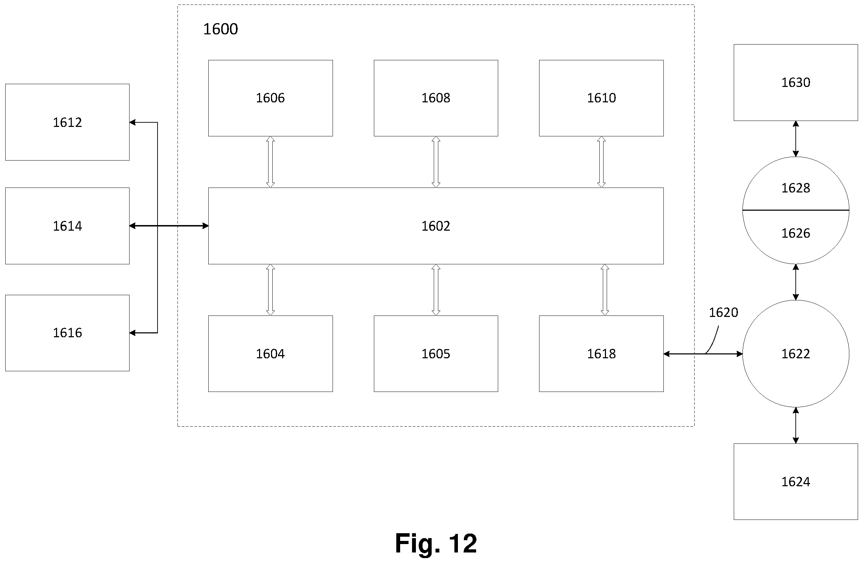

Figure 12 is a block diagram that illustrates a computer system 1600 that may assist in implementing the methods and flows disclosed herein. Computer system 1600 includes a bus 1602 or other communication mechanism for communicating information, and a processor 1604 (or multiple processors 1604 and 1605) coupled with bus 1602 for processing information. Computer system 1600 also includes a main memory 1606, such as a random access memory (RAM) or other dynamic storage device, coupled to bus 1602 for storing information and instructions to be executed by processor 1604. Main memory 1606 also may be used for storing temporary variables or other intermediate information during execution of instructions to be executed by processor 1604. Computer system 1600 further includes a read only memory (ROM) 1608 or other static storage device coupled to bus 1602 for storing static information and instructions for processor 1604. A storage device 1610, such as a magnetic disk or optical disk, is provided and coupled to bus 1602 for storing information and instructions.

Computer system 1600 may be coupled via bus 1602 to a display 1612, such as a cathode ray tube (CRT) or flat panel or touch panel display for displaying information to a computer user. An input device 1614, including alphanumeric and other keys, is coupled to bus 1602 for communicating information and command selections to processor 1604. Another type of user input device is cursor control 1616, such as a mouse, a trackball, or cursor direction keys for communicating direction information and command selections to processor 1604 and for controlling cursor movement on display 1612. This input device typically has two degrees of freedom in two axes, a first axis (e.g., x) and a second axis (e.g., y), that allows the device to specify positions in a plane. A touch panel (screen) display may also be used as an input device.

One or more of the methods as described herein may be performed by computer system 1600 in response to processor 1604 executing one or more sequences of one or more instructions contained in main memory 1606. Such instructions may be read into main memory 1606 from another computer-readable medium, such as storage device 1610. Execution of the sequences of instructions contained in main memory 1606 causes processor 1604 to perform the process steps described herein. One or more processors in a multi-processing arrangement may also be employed to execute the sequences of instructions contained in main memory 1606. In an alternative embodiment, hard-wired circuitry may be used in place of or in combination with software instructions. Thus, the description herein is not limited to any specific combination of hardware circuitry and software.

The term "computer-readable medium" as used herein refers to any medium that participates in providing instructions to processor 1604 for execution. Such a medium may take many forms, including but not limited to, non-volatile media, volatile media, and transmission media. Non-volatile media include, for example, optical or magnetic disks, such as storage device 1610. Volatile media include dynamic memory, such as main memory 1606. Transmission media include coaxial cables, copper wire and fiber optics, including the wires that comprise bus 1602. Transmission media can also take the form of acoustic or light waves, such as those generated during radio frequency (RF) and infrared (IR) data communications. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 1604 for execution. For example, the instructions may initially be borne on a magnetic disk of a remote computer. The remote computer can load the instructions into its dynamic memory and send the instructions over a telephone line using a modem. A modem local to computer system 1600 can receive the data on the telephone line and use an infrared transmitter to convert the data to an infrared signal. An infrared detector coupled to bus 1602 can receive the data carried in the infrared signal and place the data on bus 1602. Bus 1602 carries the data to main memory 1606, from which processor 1604 retrieves and executes the instructions. The instructions received by main memory 1606 may optionally be stored on storage device 1610 either before or after execution by processor 1604.

Computer system 1600 also preferably includes a communication interface 1618 coupled to bus 1602. Communication interface 1618 provides a two-way data communication coupling to a network link 1620 that is connected to a local network 1622. For example, communication interface 1618 may be an integrated services digital network (ISDN) card or a modem to provide a data communication connection to a corresponding type of telephone line. As another example, communication interface 1618 may be a local area network (LAN) card to provide a data communication connection to a compatible LAN. Wireless links may also be implemented. In any such implementation, communication interface 1618 sends and receives electrical, electromagnetic or optical signals that carry digital data streams representing various types of information.

Network link 1620 typically provides data communication through one or more networks to other data devices. For example, network link 1620 may provide a connection through local network 1622 to a host computer 1624 or to data equipment operated by an Internet Service Provider (ISP) 1626. ISP 1626 in turn provides data communication services through the worldwide packet data communication network, now commonly referred to as the "Internet" 1628. Local network 1622 and Internet 1628 both use electrical, electromagnetic or optical signals that carry digital data streams. The signals through the various networks and the signals on network link 1620 and through communication interface 1618, which carry the digital data to and from computer system 1600, are exemplary forms of carrier waves transporting the information.

Computer system 1600 may send messages and receive data, including program code, through the network(s), network link 1620, and communication interface 1618. In the Internet example, a server 1630 might transmit a requested code for an application program through Internet 1628, ISP 1626, local network 1622 and communication interface 1618. One such downloaded application may provide for one or more of the techniques described herein, for example. The received code may be executed by processor 1604 as it is received, and/or stored in storage device 1610, or other non-volatile storage for later execution. In this manner, computer system 1600 may obtain application code in the form of a carrier wave.

Further embodiments are disclosed in the subsequent list of numbered clauses:
1. A multiple wavelength light source device, being configured for generating output radiation comprising a plurality of discrete output wavelength bands, the multiple wavelength light source device comprising:
   a pump radiation source arrangement configured to generate input radiation comprising at least a first frequency component and a second frequency component; and
   a hollow-core photonic crystal fiber configured to confine a working medium;
   wherein the hollow-core photonic crystal fiber is configured to receive said input radiation and to generate said plurality of discrete output wavelength bands distributed over a wavelength range of interest via a seed-assisted cascaded four wave mixing (FWM) process in said working medium.
2. A multiple wavelength light source device as defined in clause 1, said plurality of discrete output wavelength bands number between 5 and 30 wavelength bands.
3. A multiple wavelength light source device as defined in clause 1, said plurality of discrete output wavelength bands number between 10 and 20 wavelength bands.
4. A multiple wavelength light source device as defined in any preceding clause, wherein the hollow-core photonic crystal fiber comprises a length between 1 cm and 30 cm.
5. A multiple wavelength light source device as defined in any preceding clause, wherein the hollow-core photonic crystal fiber comprises a length between 1 cm and 10 cm.
6. A multiple wavelength light source device as defined in any preceding clause, wherein a combination of pulse energy of the input radiation and length of the hollow-core photonic crystal fiber is such that at least one discrete output wavelength band of said plurality of discrete output wavelength bands is centered at 700nm or below.
7. A multiple wavelength light source device as defined in any of clauses 1 to 5, wherein a combination of pulse energy of the input radiation and length of the hollow-core photonic crystal fiber is such that at least one discrete output wavelength band of said plurality of discrete output wavelength bands is centered at 600nm or below.
8. A multiple wavelength light source device as defined in any of clauses 1 to 5, wherein a combination of pulse energy of the input radiation and length of the hollow-core photonic crystal fiber is such that at least one discrete output wavelength band of said plurality of discrete output wavelength bands is centered at 500nm or below.
9. A multiple wavelength light source device as defined in any preceding clause, wherein a combination of pulse energy of the input radiation and length of the hollow-core photonic crystal fiber is such that self-phase modulation is avoided.
10. A multiple wavelength light source device as defined in clause 9, wherein said avoidance of self-phase modulation is such that the discrete wavelength bands within said wavelength range of interest do not overlap.
11. A multiple wavelength light source device as defined in any preceding clause, wherein the pump radiation source comprises a pump radiation source operable to output pump radiation comprising said first frequency component; and
   a seed generation element being operable to generate said second frequency component from said pump radiation.
12. A multiple wavelength light source device as defined in clause 11, wherein the seed generation element comprises:
   a spectral broadening element operable to broaden the spectrum of a portion of said pump radiation; and
   a filter operable to separate the second frequency component from the broadened radiation.
13. A multiple wavelength light source device as defined in clause 12, wherein said spectral broadening element comprises a solid-core photonic crystal fiber
14. A multiple wavelength light source device as defined in clause 11, wherein said seed generation element comprises one of a difference-frequency generator, optical parametric generator, optical parametric amplifier or optical parametric oscillator.
15. A multiple wavelength light source device as defined in any preceding clause, wherein a frequency difference between said first frequency component and said second frequency component is between 10nm and 200nm.
16. A multiple wavelength light source device as defined in any preceding clause, wherein said wavelength range of interest comprises at least wavelengths between 400 nm and 2000 nm.
17. A multiple wavelength light source device as defined in any of clauses 1 to 15, wherein said wavelength range of interest comprises at least wavelengths between 400 nm and 1200 nm.
18. A multiple wavelength light source device as defined in any of clauses 1 to 15, wherein said wavelength range of interest comprises at least wavelengths between 500 nm and 1000 nm.
19. A method of generating output radiation comprising a plurality of discrete output wavelength bands, the method comprising:
   generating input radiation comprising at least a first frequency component and a second frequency component; and
   exciting a confined working medium with said input radiation to generate said plurality of discrete output wavelength bands distributed over a wavelength range of interest via a seed-assisted cascaded four wave mixing (FWM) process within said working medium.
20. A method as defined in clause 19, said plurality of discrete output wavelength bands number between 5 and 30 wavelength bands.
21. A method as defined in clause 19, said plurality of discrete output wavelength bands number between 10 and 20 wavelength bands.
22. A method as defined in any of clauses 19 to 21, wherein the working medium is confined within a hollow-core photonic crystal fiber having a length between 1 cm and 30 cm.
23. A method as defined in any of clauses 19 to 21, wherein the working medium is confined within a hollow-core photonic crystal fiber having a length between 1 cm and 10 cm.
24. A method as defined in clause 22 or 23, comprising optimizing a combination of pulse energy of the input radiation and length of the hollow-core photonic crystal fiber such that at least one discrete output wavelength band of said plurality of discrete output wavelength bands is centered at 700nm or below.
25. A method as defined in clause 22 or 23, comprising optimizing a combination of pulse energy of the input radiation and length of the hollow-core photonic crystal fiber such that at least one discrete output wavelength band of said plurality of discrete output wavelength bands is centered at 600nm or below.
26. A method as defined in clause 22 or 23, comprising optimizing a combination of pulse energy of the input radiation and length of the hollow-core photonic crystal fiber such that at least one discrete output wavelength band of said plurality of discrete output wavelength bands is centered at 500nm or below.
27. A method as defined in any of clauses 23 to 26, comprising optimizing a combination of pulse energy of the input radiation and length of the hollow-core photonic crystal fiber such that self-phase modulation is avoided.
28. A method as defined in clause 27, wherein said avoidance of self-phase modulation is such that said discrete wavelength bands within said wavelength range of interest do not overlap.
29. A method as defined in any of clauses 19 to 28, comprising setting a bandwidth of each discrete output wavelength band by appropriate setting of a pulse width of the input radiation.
30. A method as defined in any of clauses 19 to 29, wherein setting a band separation between adjacent discrete output wavelength bands by setting a frequency difference between said first frequency component and said second frequency component.
31. A method as defined in clause 30, wherein a frequency difference between said first frequency component and said second frequency component is set between 10nm and 200nm.
32. A method as defined in any of clauses 19 to 31, comprising generating said first frequency component and said second frequency component from a single pump radiation source operable to output pump radiation at only said first frequency.
33. A method as defined in clause 32, comprising generating said second frequency component from said pump radiation source by spectrally broadening a portion of said pump radiation; and separating the second frequency component from the broadened radiation.
34. A method as defined in clause 32, comprising generating said second frequency component from said pump radiation source by one of: difference-frequency generation, optical parametric generation, optical parametric amplification or optical parametric oscillation.
35. A method as defined in any of clauses 19 to 34, wherein said wavelength range of interest comprises at least wavelengths between 400 nm and 2000 nm.
36. A method as defined in any of clauses 19 to 34, wherein said wavelength range of interest comprises at least wavelengths between 400 nm and 1200 nm.
37. A method as defined in any of clauses 19 to 34, wherein said wavelength range of interest comprises at least wavelengths between 500 nm and 1000 nm.
38. A metrology device comprising:
   a substrate support for supporting a substrate;
   the multiple wavelength light source device of any of clauses 1 to 18;
   at least one optical system operable to direct the output radiation from the multiple wavelength light source device to the substrate and capture radiation having scattered from said substrate.
39. A metrology device as defined in clause 38, wherein said metrology device is operable as scatterometer metrology apparatus.
40. A metrology device as defined in clause 38, wherein said metrology device is operable as a level sensor or an alignment sensor.
41. A lithographic apparatus comprising at least one said metrology device as defined in clause 40 for performing alignment and/or levelling metrology .
42. A lithographic cell comprising the lithographic apparatus of clause 41 and a metrology device as defined in clause 39.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

## Claims

1. A multiple wavelength light source device, being configured for generating output radiation comprising a plurality of discrete output wavelength bands, the multiple wavelength light source device comprising:
a pump radiation source arrangement configured to generate input radiation comprising at least a first frequency component and a second frequency component; and
a hollow-core photonic crystal fiber configured to confine a working medium;
wherein the hollow-core photonic crystal fiber is configured to receive said input radiation and to generate said plurality of discrete output wavelength bands distributed over a wavelength range of interest via a seed-assisted cascaded four wave mixing (FWM) process in said working medium.

2. A multiple wavelength light source device as claimed in claim 1, said plurality of discrete output wavelength bands number between 5 and 30 wavelength bands.

3. A multiple wavelength light source device as claimed in any preceding claim, wherein the hollow-core photonic crystal fiber comprises a length between 1 cm and 30 cm.

4. A multiple wavelength light source device as claimed in any preceding claim, wherein a combination of pulse energy of the input radiation and length of the hollow-core photonic crystal fiber is such that at least one discrete output wavelength band of said plurality of discrete output wavelength bands is centered at 700nm or below.

5. A multiple wavelength light source device as claimed in any preceding claim, wherein a combination of pulse energy of the input radiation and length of the hollow-core photonic crystal fiber is such that self-phase modulation is avoided.

6. A multiple wavelength light source device as claimed in claim 5, wherein said avoidance of self-phase modulation is such that the discrete wavelength bands within said wavelength range of interest do not overlap.

7. A multiple wavelength light source device as claimed in any preceding claim, wherein the pump radiation source comprises a pump radiation source operable to output pump radiation comprising said first frequency component; and
a seed generation element being operable to generate said second frequency component from said pump radiation.

8. A multiple wavelength light source device as claimed in claim 7, wherein the seed generation element comprises:
a spectral broadening element operable to broaden the spectrum of a portion of said pump radiation; and
a filter operable to separate the second frequency component from the broadened radiation.

9. A multiple wavelength light source device as claimed in claim 8, wherein said spectral broadening element comprises a solid-core photonic crystal fiber

10. A multiple wavelength light source device as claimed in claim 7, wherein said seed generation element comprises one of a difference-frequency generator, optical parametric generator, optical parametric amplifier or optical parametric oscillator.

11. A multiple wavelength light source device as claimed in any preceding claim, wherein a frequency difference between said first frequency component and said second frequency component is between 10nm and 200nm.

12. A multiple wavelength light source device as claimed in any preceding claim, wherein said wavelength range of interest comprises at least wavelengths between 400 nm and 2000 nm.

13. A method of generating output radiation comprising a plurality of discrete output wavelength bands, the method comprising:
generating input radiation comprising at least a first frequency component and a second frequency component; and
exciting a confined working medium with said input radiation to generate said plurality of discrete output wavelength bands distributed over a wavelength range of interest via a seed-assisted cascaded four wave mixing (FWM) process within said working medium.

14. A method as claimed in claim 13, comprising generating said first frequency component and said second frequency component from a single pump radiation source operable to output pump radiation at only said first frequency.

15. A metrology device comprising:
a substrate support for supporting a substrate;
the multiple wavelength light source device of any of claims 1 to 18;
at least one optical system operable to direct the output radiation from the multiple wavelength light source device to the substrate and capture radiation having scattered from said substrate,
and, optionally, said metrology device is operable as scatterometer metrology apparatus, a level sensor, or an alignment sensor.
